# EUROPÄISCHE PATENTANMELDUNG

(11) **EP 2 565 775 A2**
(43) Veröffentlichungstag der Anmeldung: **06.03.2013**
(21) Anmeldenummer: 12177937.5
(22) Anmeldetag: 26.07.2012
(51) Int. Cl.: G06F 3/12, G06F 17/21

(54) **Verfahren zum Erzeugen eines Druckproduktes**

(30) Priorität: 01.09.2011 DE 102011112076
(71) Anmelder: Heidelberger Druckmaschinen AG, 69115 Heidelberg (DE)
(72) Erfinder: Kohn, Michael, 24536 Neumünster (DE)

(57) **Zusammenfassung**

Um JDF-Dateien in einem Verfahren zur Erzeugung eines Druckproduktes im Arbeitsspeicher eines Computers als Repräsentation darstellen zu können, müssen diese Dateien zunächst in einen DOM-Baum gewandelt werden. Diese Wandlung ist sehr zeitaufwendig. Was auch für einzelne Verarbeitungsschritte gilt.

Zur Beschleunigung der Codier- und Bearbeitungsschritte ist es vorgesehen, dass in einem Speicher wenigstens eine Datei in einem ersten Datenformat hinterlegt wird,
die Datei wenigstens Informationen für das Verfahren zur Erzeugung des Druckproduktes enthält,
die Datei in eine Repräsentation in einen Arbeitsspeicher eines Computers dekodiert wird, das erste Datenformat wenigstens zwei Speicherbereiche aufweist,
ein erster Speicherbereich Attribute für zu Verwendende Verfahrensschritte und/oder Materialen des Druckprozesses und/oder des Druckproduktes umfasst,
die Repräsentation auch wenigstens zwei Speicherbereiche aufweist und wobei wenigstens die Daten eines ersten Speicherbereiches der Repräsentation im Wesentlichen identisch mit den Daten wenigstens eines ersten Speicherbereiches der Datei des ersten Datenformats ist.

## Beschreibung

Die vorliegende Erfindung betrifft ein Verfahren zum Erzeugen eines Druckproduktes, wobei in einem Speicher wenigstens eine Datei in einem ersten Datenformat hinterlegt wird, die Datei wenigstens Informationen über das Verfahren zur Erzeugung des Druckprodukts enthält, die Datei in eine Repräsentation in einem Arbeitsspeicher eines Computers decodiert wird, auf diese Repräsentation im Arbeitsspeicher wenigstens eine Operation angewandt wird, so dass Daten der Repräsentation im Arbeitsspeicher geändert werden, aus den Daten der Repräsentation wieder Daten des Datenformats codiert werden und auf Grundlage der so geänderten Daten das Druckprodukt, eine Verarbeitung oder Bearbeitung des Druckproduktes oder eine Verarbeitung oder Bearbeitung der Druckvorlage angepasst wird und abschließend ein Druckprodukt unter Verwendung dieser Anpassung erstellt wird.

In der graphischen Industrie wird zur Erzeugung eines Druckproduktes jeweils mindestens ein Datensatz erzeugt, welcher insbesondere eine Druckvorlage für das Druckprodukt selber mit umfassen kann. Dieser Datensatz wird in einer Auszeichnungssprache (Markup-Language ML), wie XML, abgespeichert. In einem modernen Workflow zur Erzeugung eines Druckproduktes wird als spezielle Auszeichnungssprache die in der Druckindustrie gebräuchliche und vom CIP4-Konsortium standardisierte Sprache bzw. das entsprechende Datenformat JDF verwendet.

Innerhalb dieses Datenformats werden die Parameter, welche die einzelnen an dem Druckprodukt vorzunehmenden Arbeitsschritte beschreiben, an hierfür vorbestimmten Stellen hinterlegt. Die Datei wird dann zur Erzeugung des Druckproduktes z. B. von einem Management-Informationssystem (MIS) an weitere Bearbeitungsstationen durch- bzw. weitergereicht. Hierbei kann es sich beispielsweise um Stationen der Druckvorstufe, wie z. B. einen Plattenbelichter, die Druckmaschine selber oder Falzmaschinen handeln, die der Druckmaschine nachgeordnet sind. Mittels dieses Datenformats JDF können die entsprechenden Informationen sowohl sternförmig vom MIS an die einzelnen Arbeitsstationen als auch unter den Arbeitsstationen selber ausgetauscht werden.

Am MIS oder den einzelnen Arbeitsstationen sind Computer bereitgestellt, die Arbeitsspeicher aufweisen, in welche diese Dateien in Form einer Repräsentation decodiert werden.

Zur Bearbeitung der Dateien in den Computern werden diese entweder von einem zentralen Netzwerkspeicher oder von einem lokalen Speicher des Computers selber aufgerufen oder an den Computer gesendet.

Die XML-Daten, d. h. das JDF, wird hierbei als Datei abgespeichert. Diese Daten können mittels unterschiedlichen Schnittstellen, Protokollen oder Programmen in den Arbeitsspeicher des Computers eingelesen, d. h. decodiert werden. Hierfür können Verfahren oder APIs, wie SAX (Simple API for XML), StAX(Streaming API for XML) oder DOM-Parser (Document Object Model) verwendet werden.

Es können entweder Informationen aus dem XML aufgesammelt oder im Arbeitsspeicher ein Objektmodell in einer objektorientierten Programmiersprache, wie z. B. JAVA, erzeugt werden.

Um die Größe von XML-Dateien oder JDF-Dateien zu verringern, sind Verfahren zur Komprimierung und Dekomprimierung dieser Daten bekannt. Zu nennen wären hier z. B. Fast Infoset und EFFICIENT XML (EXI). Hierbei werden die Elemente aus dem XML in ihrer vorliegenden Reihenfolge abgespeichert. Es handelt sich hierbei um Knoten, Attribute, Texte, Kommentare, Namespaces und Steuerzeichen. Diese Einzelelemente werden dann mittels bekannter Verfahren komprimiert. Bei dieser Komprimierung werden ein oder mehrere Wörterbücher verwendet, um den Klartext der abgespeicherten Einzelbestandteile getrennt von den eigentlichen Informationen abzuspeichern. Weitere Möglichkeiten, die nicht auf XML-Dateien spezialisiert sind, sind übliche Datenkomprimierungsverfahren, wie sie z. B. von Programmen wie GZIP (GNU-ZIP) verwendet werden.

Um die XML- oder JDF-Dateien in einem Verfahren zur Erzeugung eines Druckproduktes im Arbeitsspeicher eines Computers als Repräsentation darstellen zu können, müssen diese Dateien mittels einem der vorgeschlagenen Wege üblicherweise zunächst in einen DOM-Baum gewandelt werden, bevor sie weiter verarbeitet werden können. Diese Wandlung ist sehr zeitaufwendig und der DOM-Baum verbraucht dabei sehr viel Speicher. Außerdem werden auch die einzelnen Verarbeitungsschritte auf Grundlage des DOM-Baums vergleichsweise langsam ausgeführt. Hierdurch erscheint die Bearbeitung der XML-Daten innerhalb der Repräsentation im Arbeitsspeicher des Computers für den Anwender sehr langsam, insbesondere ist das Decodierverfahren mittels der bekannten APIs und Verfahren sehr zeitaufwendig.

Durch dieses zeitaufwendige Verfahren wird der Zeitraum verlängert, nachdem mit der Erzeugung eines Druckproduktes oder einer Druckvorlage oder eines bedruckten Bedruckstoffes begonnen werden kann.

Die Aufgabe der vorliegenden Erfindung besteht daher darin, die oben geschilderten Nachteile wenigstens zu verringern.

Diese Aufgabe wird gelöst durch ein Verfahren zum Erzeugen eines Druckproduktes gemäß Anspruch 1.

Hierbei ist zunächst vorgesehen, dass eine Datei in einem ersten Datenformat in einem Speicher abgelegt wird. Bei diesem Speicher handelt es sich um einen nichtflüchtigen Speicher, wie z.B. einem Festplattenspeicher. Es kann sich alternativ auch um einen Datenstrom handeln, wenn die Datei von einem weiter entfernten Rechner oder Speicher an den Computer gesendet wird.

Diese Datei enthält wenigstens Informationen für das Verfahren zur Erzeugung des Druckproduktes. Bei diesen Informationen kann es sich beispielsweise um die verwendeten Druckbogen, die zu verwendenden Farben oder auch um die Weiterverarbeitungsschritte, die auf den bedruckten Bedruckstoff angewendet werden sollen, handeln.

Diese Datei wird verfahrensmäßig in eine Repräsentation in einem Arbeitsspeicher eines Computers decodiert. Das Datenformat dieser Datei weist wenigstens zwei Speicherbereiche auf, wobei ein erster Speicherbereich Attribute für zu verwendende bzw. anzuwendende Verfahrensschritte und / oder Materialien des Druckprozesses und / oder über das Druckprodukt selber umfasst.

Erfindungsgemäß soll die Repräsentation im Arbeitsspeicher selber auch wenigstens zwei Speicherbereiche aufweisen, wobei wenigstens die Daten eines ersten Speicherbereichs der Repräsentation im Wesentlichen identisch mit den Daten wenigstens des ersten Speicherbereichs der Datei des ersten Datenformats im Speicher sind.

Auf die Daten der Repräsentation im Arbeitsspeicher wird wenigstens eine Operation angewendet. In Abhängigkeit von dieser Operation werden dann die Daten der Repräsentation im Arbeitsspeicher geändert. Ausgehend von diesen geänderten Daten der Repräsentation wird erneut eine Datei in dem ersten Datenformat codiert.

Bei der Operation kann es sich beispielsweise um Änderungen der Auflage, des verwendeten Bedruckstoffes, des Falzschemas, des Layouts oder etwas Ähnlichem handeln.

Diese geänderten Daten des ersten Datenformats werden an wenigstens eine Verarbeitungsvorrichtung zur Verarbeitung oder Bearbeitung von Druckprodukten oder Druckvorlagen übertragen. Die Übertragung kann als Datenstrom, wie z. B. über ein Intra - oder das Internet erfolgen oder auch durch ein Zwischenspeichern der Datei selber auf einem Datenträger oder einem Server.

Auf Grundlage der geänderten Daten wird das Druckprodukt, die Verarbeitung des Druckproduktes oder die weitere Bearbeitung des Druckproduktes selber oder alternativ auch der Druckvorlage angepasst. Abschließend wird ein fertiges Druckprodukt dann unter Verwendung dieser Anpassung erstellt.

Durch die Bereitstellung von Informationen in einem ersten Speicherbereich der Datei des ersten Datenformats in einer Form, die im Wesentlichen identisch ist, mit der Art und Weise, wie diese Informationen im ersten Speicherbereich der Repräsentation abgelegt sind, entfällt zumindest für diesen ersten Speicherbereich eine zeitaufwendige Umwandlung der abgespeicherten Informationen. Hierdurch kann die Decodierung der gesamten Datei wesentlich schneller erfolgen.

Um diesen Schritt vorzunehmen, ist es notwendig, zumindest bereichsweise, d. h. wenigstens in diesem ersten Speicherbereich, von den Spezifikationen von XML, wenigstens aber von den Spezifikationen der JDF, d.h. den Vorgaben der CIP4 Spezifikationen abzuweichen.

Um die Bearbeitung der Datei, d. h. der Repräsentation der Datei im Arbeitsspeicher, zu vereinfachen, ist es in einer Weiterbildung vorgesehen, dass die im Wesentlichen identischen ersten Speicherbereiche wenigstens dieselben Knoten und Attributindices aufweisen.

Dadurch dass bei einem verfahrensmäßig vorgesehenen Einlesen der Daten des ersten Datenformats in den Arbeitsspeicher keine Konvertierung der Daten, zumindest in den im Wesentlichen identischen Speichereichen vorgenommen wird, kann entsprechend die Geschwindigkeit der Decodierung erhöht werden.

Um ein möglichst effizientes und schnelles Einlesen der Daten des ersten Datenformats im Arbeitsspeicher zu gewährleisten, ist es in einer Weiterbildung vorgesehen, dass die digitalen Darstellungen der Daten des ersten Speicherbereiches des ersten Datenformats und der Repräsentation im Arbeitsspeicher bit für bit übereinstimmend, ausgehend vom ersten Datenformat in die Repräsentation im Arbeitsspeicher oder umgekehrt gelesen und geschrieben werden.

Um auch Informationen, die nicht im Wesentlichen identisch im ersten Speicherbereich hinterlegt werden können, möglichst schnell zu konvertieren bzw. decodieren, ist es ergänzend vorgesehen, dass wenigstens ein zweiter Speicherbereich des ersten Datenformats bereitgestellt wird, in diesem zweiten Speicherbereich die Daten dabei in der gleichen Struktur, wie in einem zweiten Speicherbereich der Repräsentation im Arbeitsspeicher, organisiert sind, wenigstens ein dritter Speicherbereich des ersten Datenformats oder der Repräsentation oder beider bereitgestellt wird, und dieser dritte Speicherbereich ein Wörterbuch zur Konvertierung von binären Attributdaten des Datenformats umfasst, um mittels dieses Wörterbuchs binäre Attributdaten des zweiten Speicherbereichs des ersten Datenformats in Objekte einer höheren Programmiersprache des zweiten Speicherbereichs der Repräsentation zu wandeln. Die Daten im zweiten Speicherbereich sind dabei nicht digital bit für bit identisch abgelegt, sondern müssen noch konvertiert werden, dass Wörterbuch ermöglicht diese Konvertierung.

Auf diese Weise können auch weitere, insbesondere durch ein Wörterbuch zusammengefasste Attributdaten, welche nur als Objekte einer höheren Programmiersprache in der Repräsentation des Arbeitsspeichers bereitgestellt werden können, zügig decodiert werden.

Vorteilhafterweise sollen dabei nur Einzelwerte des zweiten Speicherbereichs des ersten Datenformats durch Strings des Wörterbuchs des dritten Speicherbereichs ersetzt werden und im Übrigen die Strukturen der zweiten Speicherbereiche von ersten Datenformat und Repräsentation im Arbeitsspeicher identisch sein. Hierdurch können die notwendigen Decodierungsschritte reduziert werden.

In einer bevorzugten Ausführungsform ist es vorgesehen, dass das erste Datenformat aus einem XML-Dialekt bevorzugt aus einem JDF-Format erzeugt wird. Diese JDF-Formate sind gebräuchlich und werden in Workflows zur Erzeugung von Druckprodukten bevorzugt verwendet.

Die Daten einer entsprechenden JDF-Datei oder einer Datei in einem XML-Dialekt werden dann verfahrensmäßig in einer Repräsentation im Arbeitsspeicher eines ersten Computers konvertiert, wobei ein erster Speicherbereich der Repräsentation bit für bit identisch mit den Daten des ersten Datenformats aufgebaut wird und das erste Datenformat codiert wird, indem wenigstens der erste Speicherbereich der Repräsentation bit für bit in einen ersten Speicherbereich des ersten Datenformat kopiert wird. Bei dieser Konvertierung handelt es sich im Wesentlichen um einen Kopierschritt. Das einfache Kopieren von bits von einem Speicherbereich des Arbeitsspeichers in einen Speicherbereich eines anderen Speichers benötigt dabei keine Zeit für die Umwandlung, d. h. Codierung oder Decodierung der entsprechend hinterlegten Daten. Das erste Datenformat ist dabei von der JDF-Datei oder der anderen Datei in einem XML-Dialekt grundsätzlich verschieden. Durch die Konvertierung der JDF-Datei oder der XML-Datei entsteht die Repräsentation erstmalig im Arbeitsspeicher und durch den bit für bit identischen Aufbau des ersten Speicherbereichs des ersten Datenformats wird dieses erste Datenformat im ersten Computer erstmalig auf Grundlage der JDF- bzw. XML-Datei erzeugt. Im weiteren Workflow wird dann das erste Datenformat mit den genannten Vorteilen verwendet. Hierfür muss allerdings deutlich von den JDF-Spezifikationen abgewichen werden, was zur Erreichung der Vorteile aber in Kauf genommen wird.

Eine noch schnellere Codierung bzw. Decodierung der gesamten Datei des ersten Datenformats in die Repräsentation im Arbeitsspeicher oder umgekehrt kann dadurch erreicht werden, dass redundante Attributmengen (attribute maps) der JDF-Datei nur einmal in einem ersten oder zweiten Speicherbereich der Repräsentation im Arbeitsspeicher abgelegt und über ein Wörterbuch im dritten Speicherbereich der Repräsentation referenziert werden. Vorzugsweise können hierbei ausschließlich Redundanzen der Attributmengen aufgelöst werden.

Weiterhin ist es vorgesehen, dass das erste Datenformat bzw. eine Datei des ersten Datenformats über ein Netzwerk oder ein Speichermedium in einen zweiten Computer übertragen wird, diese Daten des ersten Datenformats in eine Repräsentation im Arbeitsspeicher des zweiten Computers decodiert werden und hierbei wenigstens die Daten des ersten Speicherbereichs bit für bit identisch in einen ersten Speicherbereich der Repräsentation im Arbeitsspeicher des zweiten Computers kopiert werden oder alternativ ausgehend vom ersten Datenformat erneut eine Repräsentation im Arbeitsspeicher des ersten Computers erzeugt werden statt sie diese Daten an einen zweiten Computer zu übertragen, wobei wenigstens die Daten des ersten Speicherbereichs des ersten Datenformats bit für bit identisch in einen ersten Speicherbereich der Repräsentation kopiert werden. Es werden dann anschließend Operationen auf die Daten der jeweiligen Repräsentation im Arbeitsspeicher des ersten oder zweiten Computers angewandt und unter Berücksichtigung dieser Operationen ein Druckprodukt mittels einer Druckmaschine, einer Druckvorstufeneinrichtung oder eine Druckverarbeitungseinrichtung erzeugt oder wenigstens manipuliert. Hierbei kann vorteilhafterweise in mehreren Verfahrensschritten am gleichen oder in unterschiedlichen Computern die Identität von Speicherbereichen der Repräsentation im Arbeitsspeicher und des ersten Datenformats ausgenutzt werden, um jeweils schneller Manipulationen am Computer durchführen zu können bzw. die entsprechenden Daten im Computer zur Verfügung zu stellen und so auf schnellere Art und Weise einfacher zu einem manipulierten Druckprodukt zu gelangen.

Selbständig soll auch Schutz für ein entsprechendes Speichermedium mit einem Computerprogramm zur Durchführung eines der Verfahren nach wenigstens einem der oben genannten Verfahrensschritte erlangt werden.

Ein Beispiel des erfindungsgemäßen Verfahrens, auf das die Erfindung aber nicht beschränkt sein soll und aus dem sich weitere erfindungsgemäße Merkmale ergeben können, ist im Folgenden beschrieben.

Zunächst wird in einem ersten Computer, dieser kann Bestandteil eines Management Information System (MIS) sein, eine erste Datei erzeugt. Diese Datei kann in einem ersten Verfahrensschritt in einem Computer zu einer Repräsentation im Arbeitsspeicher des Computers transformiert werden und in einem anschließenden zweiten Schritt kann die Repräsentation im Arbeitsspeicher ggf. nach einer entsprechenden Bearbeitung wieder zurück in das entsprechende erste Datenformat transformiert werden. Auf diese Weise kann auch erstmals eine Datei in dem ersten Datenformat erzeugt werden, wenn die zunächst erzeugte Datei in einem XML-Dialekt bzw. im JDF-Format erzeugt wurde.

Das erste Datenformat ist dabei im Groben auf folgende Art und Weise aufgebaut, d. h. es besitzt die folgenden Abschnitte:

| |
|---|
| Header |
| Knoten |
| Attributindizes |
| Attributtabelle |
| Stringtabelle |

Die einzelnen Abschnitte werden im Folgenden detailliert beschrieben:

Der Header besteht aus folgenden Einträgen:

| |
|---|
| Eindeutige Formatkennung |
| Versionskennung |
| Urheberkennung |
| Größe des Knoten-Bereiches |
| Größe des Attribut-Tabelle |
| Größe der Stringtabelle |
| Kennung für die Formatvariante |

Die Formatkennung ist eine eindeutige Byte-Sequenz, die es einem Computerprogramm ermöglicht das erste Datenformat als solches zu erkennen.

Die Versionskennung definiert die Version des ersten Datenformats. Typisch wäre zum Beispiel: "1.0.0.0". Die Kennung ist dafür gedacht, um im Laufe der Zeit Verbesserungen in das erste Datenformat einfließen zu lassen. Ein Computerprogramm, das eine Datei in diesem ersten Datenformat liest, kann dann die Versionskennung auswerten, um sowohl alte, als auch neue Versionen des ersten Datenformats lesen zu können.

Die Urheberkennung ist eine individuelle Kennung der Software oder der Organisation, die die Datei des ersten Datenformats erzeugt

Die Größe der Abschnitte "Knoten", "Attribut-Tabelle" und "Stringtabelle" wird in Anzahl Bytes angegeben.

Die Formatvariante besteht aus einer Menge von Bits, die jeweils eine spezielle Art des ersten Datenformats kennzeichnen. Folgende Arten gibt es:

| | |
|---|---|
| Bit 0 | Komprimiert oder unkomprimiert |
| Bit 1 | Kennung für die Anzahl Bits pro Knoten |
| Bit 2 | |
| Bit 3 | Kennung für die Anzahl Bits pro Attributindex |
| Bit 4 | |
| Bit 5 | Kennung für die Anzahl Bits pro Stringindex |
| Bit 6 | |

Bit 0 definiert, ob die Daten nach dem Header komprimiert sind oder nicht. Falls ja, dann sind sie mit dem bekannten Verfahren "gzip" komprimiert worden. Vor dem Lesen der eigentlichen Inhalte müssen sie also einmal dekomprimiert werden. Der Header selbst ist immer unkomprimiert!

Mit Bit 1 bis 6 wird angegeben, wie breit die Elemente der einzelnen Abschnitte sind. Der Default liegt bei 16 Bit je einzelnem Element.

Aufbau des Knotenbereiches:

Sei n die Anzahl der Knoten in dem XML- bzw. JDF-Dokument. Dann sind die Knoten als Aneinanderreihung von n Bitmustern gleicher Größe gespeichert:

| | | | | |
|---|---|---|---|---|
| 0 | 1 | ... | n-2 | n-1 |

Jeder Knoten wird als eine Folge von m Bits gespeichert. Dabei ist m für alle Knoten identisch. m ergibt sich aus dem Header und ist im Normalfall gleich 16. Die Reihenfolge der Knoten entspricht der Reihenfolge der Knoten in der korrespondierenden XML-Datei. Die m Bits haben folgende Bedeutung:

| | | |
|---|---|---|
| 0 | 1 | 2 bis m-1 |

Bit 0 zeigt an, ob es sich um das erste Kindelement handelt oder nicht.

Bit 1 zeigt an ob es sich um das letzte Kindelement handelt oder nicht.

Die restlichen Bits bilden entweder einen Index in der Stringtabelle oder enthalten die Kennung für einen Kommentar oder ein Textelement. Bilden die Bits 2 bis m-1 den Wert 0x3FFF, dann handelt es sich um einen Textknoten. Bilden die Bits 2 bis m-1 den Wert 0x3FFE, dann handelt es sich um einen Kommentar-Knoten. Ansonsten bilden die Bits einen Index für den Knotenabschnitt in der Stringtabelle.

### Aufbau des Attributindex-Bereiches:

Dieser Bereich besteht ebenso wie der Knotenbereich aus einer Aneinanderreihung von n Bitmustern gleicher Größe. n ist die Anzahl der Knoten. Es gibt also für jeden Knoten einen Attributindex.

| | | | | |
|---|---|---|---|---|
| 0 | 1 | ... | n-2 | n-1 |

Jeder Index wird als eine Folge von m Bits gespeichert. Dabei ist m für alle Indizes identisch. m ergibt sich aus dem Header und ist im Normalfall gleich 16. Die m Bits bilden einen Index, der je nach Knotenart die folgende Bedeutung hat:

Wenn es sich um einen Text- oder Komentar-Knoten handelt, dann zeigt der Index auf einen String im Abschnitt der allgemeinen Strings in der Stringtabelle. Ansonsten zeigt der Index auf eine AttributMap in der Attributtabelle.

Eine AttributMap ist die Gesamtheit der Attribute eines XML-Knotens.

Zwei Beispiele:
<Color CMYK="0.27 0.00 0.38 0.00" ColorType="Normal" Name="PANTONE 358 C" />

Der Knoten mit Namen "Color" hat die drei Attribute "CMYK", "ColorType" und "Name". Diese Attribute haben die folgenden Werte:
- CMYK: = "0.27 0.00 0.38 0.00"
- ColorType: = "Normal"
- Name: = "PANTONE 358 C"

Die Menge aus Attributen und den zugehörigen Werten bildet die AttributMap.

### Aufbau der Attribut-Tabelle:

Sei p die Anzahl der AttributMaps. Dann sind die AttributMaps hintereinander als p Datensätze abgespeichert:

| | | | | | |
|---|---|---|---|---|---|
| 0 | 1 | 2 | ... | p-2 | p-1 |

Die Größe der Speicherbereichs pro AttributMap ergibt sich aus der Größe der AttributMap.

Die Größe eines einzelnen Datensatzes ist also im Gegensatz zu den Knoten und Attributindizes variabel. Daher ist ein direkter Sprung zu dem Datensatz per Index nicht möglich. Um mit einem Attribut-Index zu der AttributMap zu kommen, müssen die AttributMaps vorher gelesen, also interpretiert worden sein. Nicht jeder Knoten hat eine AttributMap. Mehrere Knoten können auf die gleiche AttributMap verweisen. Es gibt auch Knoten ohne AttributMap. Die Anzahl der AttributMaps ist also im Allgemeinen kleiner als die Anzahl der Knoten. Sei q die Anzahl der Attribute einer einzelnen AttributMap. Dann ist der Aufbau wie folgt:

| | | | | | |
|---|---|---|---|---|---|
| Anzahl Attribute | Flag | Attribut 0 | Attribut 1 | ... | Attribut q-1 |

Das Flag hat die Größe von einem Bit und gibt an, ob die AttributMap mehrfach verwendet wird oder nicht. Jedes Attribut besteht aus den folgenden Einträgen:

| | |
|---|---|
| Index des Attributnamens | Index des Attributwertes |

Die Größe der Indizes ist im Header definiert und beträgt im Normalfall 16 Bit. Der Index des Attributnamens zeigt auf einen Eintrag im Attributnamen-Abschnitt der Stringtabelle. Der Index des Attributwertes zeigt auf einen Eintrag im Allgemein-Abschnitt der Stringtabelle.

### Aufbau der Stringtabelle:

Die Stringtabelle besteht aus einem Header und 3 Abschnitten:

| |
|---|
| Tabellen-Header |
| Knotennamen |
| Attributnamen |
| Allgemeine Strings |

Der Header besteht aus 3 Integer-Werten, die jeweils die Anzahl der Strings pro Abschnitt definieren:

| | | |
|---|---|---|
| Anzahl Knotennamen-Strings | Anzahl Attributnamen-Strings | Anzahl allgemeiner Strings |

Die Strings sind im UTF-8-Format abgelegt.

### Repräsentation im Speicher eines Computers:

Für das erste Datenformat wird zunächst eine Repräsentation im Arbeitsspeicher erzeugt, diese Repräsentation wird als Datenformat der Klasse BJDFDocument für binäres JDF-Dokument bezeichnet. Im Folgenden wird beschrieben, wie aus einer JDF-Datei, bzw. einer XML-Datei ein BJDFDocument erzeugt wird und anschließend als Datei im ersten Datenformat abgespeichert wird.

### Beschreibung der Klasse "BJDFDocument" in UML-Notation:

| **BJDFDocument** |
|---|
| m_ElementBuffer: short[*] |
| m_AttrIndexBuffer : int[*] |
| m_AttributeBuffer : AttributeData[*] |
| m_Dictionary : Dictionary |
| m_ChildrenMap : IntList[*] |
| |
| getAttributeData( nElementIndex : int ) : AttributeData |
| setAttributeData( nElementIndex : int,data : AttributeData ) |
| getNodeName( nElementIndex : int ) : String |
| insertNode( nElementIndex : int ) |
| deleteNode( nElementIndex : int ) |
| getTexts( nElementIndex : int ) : String[*] |
| getComments( nElementIndex : int ) : String[*] |
| getNumElements(): int |
| getChildren( nElementIndex : int) : IntList |
| |

Die Attribute "m_ElementBuffer" und "m_AttrIndexBuffer" enthalten 1 zu 1 die Knoten und die Attributindizes aus der Datei des ersten Datenformats. Bei dieser Datei handelt es praktisch um eine binäre XML-Datei.

"m_AttributeBuffer" enthält die AttributMaps jeweils repräsentiert durch die Java-Klasse "AttributeData".

"m_Dictionary" enthält die Stringtabelle, also das Wörterbuch.

"m_ChildrenMap" ist der Cache der Kindelemente und wird aus "m_ElementBuffer" generiert. Die Informationen in "m_ChildrenMap" sind also redundant und dienen lediglich dem schnellen Zugriff.

Die Methoden von "BJDFDocument" deuten an, dass alle wichtigen Operationen auf den Daten möglich sind. Es handelt sich hier nur um die Minimalfunktionalität. Eine echte Implementierung für den praktischen Gebrauch wird weitaus mehr Methoden zur Verfügung stellen. Die Details der Implementierung sind hier nicht weiter erläutert. Für einen Fachmann sollte die Implementierung mit den gegebenen Informationen kein Problem sein.

Im Folgenden wird beschrieben, wie die Daten der binären XML-Daten, das heißt der Daten des ersten Datenformats gelesen und in ein BJDFDocument, d.h. in eine Repräsentation im Arbeitsspeicher eines Computers übertragen werden.

Die Struktur der Daten in der Klasse "BJDFDocument" ähnelt der Struktur in der Datei im ersten Datenformat sehr stark. "m_ElementBuffer" und "m_AttrIndexBuffer" enthalten die Daten in identischer Form, wie in der gespeicherten bzw. zu speichernden Datei im ersten Datenformat. Diese Daten werden ohne Konvertierung eingelesen. "m_AttributeBuffer" und "m_Dictionary" enthalten die Daten in gleicher Struktur, wie im gespeicherten Format. Nur die Einzelwerte aus "m_AttributeBuffer" müssen jeweils dekodiert werden und in Objekte einer höheren Programmiersprache gewandelt werden. Dazu werden die Codes aus dem Binärformat jeweils mit den Strings aus dem Dictionary ersetzt.

Auf diese Weise gibt es zu dem ersten Datenformat eine korrespondierende Repräsentation der Daten im Arbeitsspeicher, die sich nur geringfügig von dem ersten Datenformat unterscheidet. Das BJDFDocument übernimmt hier die Rolle des DOM-Baumes in einem herkömmlichen System. Da das erste Datenformat sich in seiner Struktur nur wenig von der Repräsentation der Daten im Arbeitsspeicher unterscheidet, ist ein extrem schnelles Lesen und Schreiben der Daten möglich. Die Knoten und die Attributindizes werden aus der Datei 1 : 1 übernommen und müssen nicht decodiert werden, da diese Daten ca. 30 % der Daten in der binären Datei ausmachen, bedeutet das, dass 30 % der Daten beim Lesen nicht decodiert und beim Schreiben nicht encodiert werden müssen. Nur der Rest muss noch transformiert werden.

Es ist auch vorgesehen, dass die AttributMaps als Ganzes in einem separaten Bereich abgelegt werden. Dadurch ist es möglich, Duplikate von ganzen AttributMaps nur ein einziges Mal abzuspeichern, anstatt sie immer und immer wieder zum Datenstrom hinzuzufügen. In einem herkömmlichen "Main-JDF" sind überlicherweise Duplikate von kompletten AttributMaps vorhanden. Diese werden dann jeweils nur einmal abgespeichert. Der Knoten hat dann jeweils nur einen Verweis zu dieser Stelle im Datenstrom.

Es ist dabei weiterhin vorgesehen, um eine schnelle Bearbeitung zu ermöglichen, jeder AttributMap eine Information zuzuführen, die angibt, ob diese mehrfach verwendet wird. Mit dieser Information kann eine entsprechende Software beim Editieren des Dokuments schnell bestimmen, ob eine AttributMap vor einer Änderung kopiert werden muss oder nicht. Die AttributMaps können dann entsprechend im Cache bereitgestellt werden.

Auf diese Weise ist ein schnelleres Bearbeiten des binären Datenformats, d. h. des BJDF-Documents im Arbeitsspeicher möglich und das Dateiformat wird schnell in den Arbeitsspeicher transformiert und von dem Arbeitsspeicher wieder auch wesentlich schneller als bisher bekannt wieder zurück in den eigentlichen Speicher transformiert. Auf diese Weise kann anschließend auf Grundlage dieses Dateiformats ein Druckprodukt, z. B. durch Bebilderung einer Druckform in einem Plattenbelichter auf Grundlage des Dateiformats mit den dazugehörigen Informationen erstellt werden.

## Patentansprüche

1. Verfahren zum Erzeugen eines Druckproduktes, wobei
in einem Speicher wenigstens eine Datei in einem ersten Datenformat hinterlegt wird, die Datei wenigstens Informationen für das Verfahren zur Erzeugung des Druckproduktes enthält,
die Datei in eine Repräsentation in einen Arbeitsspeicher eines Computers dekodiert wird, das erste Datenformat wenigstens zwei Speicherbereiche aufweist,
ein erster Speicherbereich Attribute für zu Verwendende Verfahrensschritte und/oder Materialen des Druckprozesses und/oder des Druckproduktes umfasst,
die Repräsentation auch wenigstens zwei Speicherbereiche aufweist, wobei wenigstens die Daten eines ersten Speicherbereiches der Repräsentation im Wesentlichen identisch mit den Daten wenigstens eines ersten Speicherbereiches der Datei des ersten Datenformats ist,
auf die Daten der Repräsentation im Arbeitsspeicher wenigstens eine Operation angewendet wird, in Abhängigkeit von der Operation Daten der Repräsentation geändert werden, aus den Daten der Repräsentation wieder Daten des Datenformats codiert werden,
die Daten des Datenformats als Datei oder Datenstrom an wenigstens eine Verarbeitungsvorrichtung zur Verarbeitung oder Bearbeitung von Druckprodukten oder Druckvorlagen übertragen werden, auf Grundlage der so geänderten Daten das Druckprodukt, die Verarbeitung oder Bearbeitung des Druckproduktes oder die Verarbeitung oder Bearbeitung der Druckvorlage angepasst wird und abschließend ein Druckprodukt unter Verwendung dieser Anpassung erstellt wird.

2. Verfahren nach Anspruch 1,
**dadurch gekennzeichnet, dass**
die im Wesentlichen identischen ersten Speicherbereiche wenigstens dieselben Knoten und Attributindizes aufweisen.

3. Verfahren nach Anspruch 1 oder 2,
**dadurch gekennzeichnet, dass**
die im Wesentlichen identischen ersten Speicherbereiche die jeweiligen Daten in identischer Form aufweisen und bei einem Einlesen der Daten des ersten Datenformats in den Arbeitsspeicher keine Konvertierung der Daten dieser im Wesentlichen identischen ersten Speicherbereiche vorgenommen wird.

4. Verfahren nach Anspruch 3,
**dadurch gekennzeichnet, dass**
die digitalen Darstellungen der Daten der ersten Speicherbereiche des ersten Datenformats und der Repräsentation im Arbeitsspeicher Bit für Bit übereinstimmend ausgehend vom ersten Datenformat in die Repräsentation im Arbeitsspeicher oder umgekehrt gelesen und geschrieben werden.

5. Verfahren nach Anspruch 1,
**dadurch gekennzeichnet, dass**
wenigstens ein zweiter Speicherbereich des ersten Datenformats bereitgestellt wird, in diesem zweiten Speicherbereich die Daten in der gleichen Struktur wie in einem zweiten Speicherbereich der Repräsentation im Arbeitsspeicher bereitgestellt sind, wenigstens ein dritter Speicherbereich des ersten Datenformats und / oder der Repräsentation bereitgestellt wird,
dieser dritte Speicherbereich ein Wörterbuch zur Konvertierung von binären Attributdaten des Datenformats umfasst, und mittels dieses Wörterbuchs binäre Attributdaten des zweiten Speicherbereichs des ersten Datenformats in Objekte einer höheren Programmiersprache des zweiten Speicherbereichs der Repräsentation gewandelt werden.

6. Verfahren nach Anspruch 5,
**dadurch gekennzeichnet, dass**
nur Einzelwerte des zweiten Speicherbereichs des ersten Datenformats durch Strings des Wörterbuchs des dritten Speicherbereichs ersetzt werden und im Übrigen die Strukturen der zweiten Speicherbereiche von erstem Datenformat und Repräsentation im Arbeitsspeicher identisch ist.

7. Verfahren nach Anspruch 1,
**dadurch gekennzeichnet, dass**
das erste Datenformat aus einem XML-Dialekt, bevorzugt einem JDF-Format erzeugt wird,
die Daten einer entsprechenden JDF-Datei oder einer Datei in einem XML-Dialekt in eine Repräsentation im Arbeitsspeicher eines ersten Computers konvertiert werden, ein erster Speicherbereich der Repräsentation Bit für Bit identisch mit den Daten des ersten Datenformats aufgebaut wird, und
das erste Datenformat codiert wird, indem wenigstens der erste Speicherbereich der Repräsentation Bit für Bit in einen ersten Speicherbereich des ersten Datenformats identisch kopiert wird.

8. Verfahren nach Anspruch 7,
**dadurch gekennzeichnet, dass**
redundante Attributmengen (AttributMaps) der JDF-Datei nur einmal in einem ersten oder zweiten Speicherbereich der Repräsentation im Arbeitsspeicher abgelegt und über ein Wörterbuch im dritten Speicherbereich der Repräsentation referenziert werden, wobei vorzugsweise ausschließlich Redundanzen der Attributmengen aufgelöst werden.

9. Verfahren nach Anspruch 7,
**dadurch gekennzeichnet, dass**
Daten im ersten Datenformat über ein Netzwerk oder Speichermedium an einen zweiten Computer übertragen werden,
die Daten des ersten Datenformats in eine Repräsentation im Arbeitsspeicher des zweiten Computers decodiert werden, und
hierbei wenigstens die Daten des ersten Speicherbereichs Bit für Bit identisch in einen ersten Speicherbereich der Repräsentation im Arbeitsspeicher des zweiten Computers kopiert werden,
oder alternativ ausgehend vom ersten Datenformat erneut Repräsentationen im Arbeitsspeicher des ersten Computers erzeugt werden,
wobei wenigstens die Daten des ersten Speicherbereichs des ersten Datenformats Bit für Bit identisch in einen ersten Speicherbereich der Repräsentation kopiert werden, Operationen auf die Daten der jeweiligen Repräsentation im Arbeitsspeicher des ersten oder zweiten Computers angewandt werden und unter Berücksichtigung dieser Operationen ein Druckprodukt mittels einer Druckmaschine, einer Druckvorstufeneinrichtung oder einer Druckverarbeitungseinrichtung erzeugt oder manipuliert wird.

10. Speichermedium mit einem Computerprogramm zur Durchführung eines Verfahrens nach wenigstens einem der vorigen Ansprüche.
